# EUROPÄISCHE PATENTSCHRIFT

(11) **EP 4 467 318 B1**
(45) Veröffentlichungstag und Bekanntmachung des Hinweises auf die Patenterteilung: **08.04.2026**
(21) Anmeldenummer: 23175837.6
(22) Anmeldetag: 26.05.2023
(51) Int. Cl.: B29C 45/27, B29C 45/28

(54) **VORKAMMERBUCHSE FÜR EINE HEISSKANALDÜSE EINES HEISSKANALSYSTEMS EINES SPRITZGUSSWERKZEUGS EINER SPRITZGUSSMASCHINE, SPRITZGUSSWERKZEUG, SPRITZGUSSMASCHINE UND VERFAHREN**
PRE-CHAMBER SOCKET FOR A HOT RUNNER NOZZLE OF A HOT RUNNER SYSTEM OF AN INJECTION MOULDING TOOL OF AN INJECTION MOULDING MACHINE, INJECTION MOULDING MACHINE AND METHOD
CHEMISE DE CHAMBRE DE PRÉCOMBUSTION POUR BUSE DE CANAL CHAUD D'UN SYSTÈME DE CANAL CHAUD D'UN OUTIL DE MOULAGE PAR INJECTION, MOULE DE MOULAGE PAR INJECTION, MACHINE DE MOULAGE PAR INJECTION ET PROCÉDÉ

(43) Veröffentlichungstag der Anmeldung: 27.11.2024
(73) Patentinhaber: Haidlmair Holding GmbH, 4542 Nussbach (AT)
(72) Erfinder: WINDHAGER, Willibald, 4591 Molln (AT); SCHERSCH, Daniel, 3370 Ybbs an der Donau (AT)
(74) Vertreter: Jell, Friedrich

(56) Entgegenhaltungen:
- DE-U1- 202007 006 060
- US-A1- 2018 290 361
- US-B1- 6 220 850

## Beschreibung

Die Erfindung betrifft eine Vorkammerbuchse für eine Heißkanaldüse eines Heißkanalsystems eines Spritzgusswerkzeugs einer Spritzgussmaschine, ein Spritzgusswerkzeug, eine Spritzgussmaschine und ein Verfahren.

Bei einem Heißkanalsystem einer Spritzgussmaschine finden Vorkammerbuchsen Anwendung, um an eine gekühlte Formkavität eine beheizte Düse, nämlich Heißkanaldüse, anzuschließen. Die Vorkammerbuchse muss hierfür sowohl thermisch leitend zur gleichmäßigen Kühlung der Kavität als auch thermisch isolierend im Bereich des Heißkanals ausgebildet sein. Letzteres ist insbesondere im Angusskanal der Vorkammerbuchse zur Kavität des Spritzgusswerkzeugs hin der Fall.

Zudem muss die Vorkammerbuchse einem mechanischen Kontakt, beispielsweise mit einer Verschlussnadel zum Verschließen des Angusskanals, standhalten. Hierzu schlägt die DE202007006060U1 vor, eine Stahllegierung auf einem hoch wärmeleitfähigen Grundkörper aus einer Kupferlegierung aufzuschweißen. Der Auftragswerkstoff bildet den Angusskanal und einen ersten Abschnitt am vorderen Konturabschnitt der Vorkammerbuchse aus, welcher vordere Konturabschnitt zur Begrenzung einer Kavität des Spritzgusswerkzeugs dient. Mit diesem Angusskanal aus einer Stahllegierung wird die mechanische Stabilität in diesem Bereich der Vorkammerbuchse erhöht. Der wärmeleitfähige Grundkörper ist zwar einer gleichmäßigeren Kühlung der Kavität dienlich, leitet jedoch auch die Wärme der Heißkanaldüse auf das Spitzgusswerkzeug bedeutend ab - was eines Nachheizens der Heißkanaldüse bedarf und/oder zu einem schwankenden zeitlichen Temperaturverlauf der Kunststoffschmelze führt. Mit einer Beeinträchtigung der Qualität des Spritzgussteils ist somit zu rechnen.

Die Erfindung hat sich daher ausgehend vom eingangs geschilderten Stand der Technik die Aufgabe gestellt, eine Vorkammerbuchse zu schaffen, die trotz hoher mechanischer Standfestigkeit und hoher thermischer Leitfähigkeit zur Kavität hin für eine aufgenommene Heißkanaldüse keine thermische Senke darstellt.

Die Erfindung löst die gestellte Aufgabe durch die Merkmale des Anspruchs 1.

Da der Grundkörper aus einer ersten Stahllegierung besteht, kann eine vergleichsweise gute thermische Entkopplung von Spritzgusswerkzeug und Heißkanaldüse ermöglicht werden - was deren Temperierung erleichtert. Dies führt zu einer gleichmäßigeren Temperatur der Kunststoffschmelze bei der Beschickung der Kavität über den Angusskanal. Diese thermische Entkopplung schadet jedoch nicht der Kühlung der Kavität, weil die Vorkammerbuchse eine erste Auftragsschweißung aus einer Kupferlegierung außen am Grundkörper aufweist. Diese erste Auftragsschweißung bildet den seitlichen Mantelabschnitt zumindest teilweise aus und erstreckt sich über einen ersten Abschnitt des vorderen Konturabschnitts bis zum zweiten Abschnitt des vorderen Konturabschnitts. Trotz des vergleichsweise schlecht wärmeleitenden Grundkörpers kann mit dieser ersten Auftragsschweißung eine ausreichende Wärmeableitung aus der Kavität erreicht werden - was beispielsweise die Gefahr für einen Verzug am Spritzgussteil gering hält.

Die erfindungsgemäße Vorkammerbuchse sorgt sohin nicht nur für eine gleichmäßigere Temperatur der Kunststoffschmelze bei der Beschickung der Kavität, sondern stellt auch ein gleichmäßigeres Abkühlen dieser Kunststoffschmelze sicher, um ein Spritzgussteil ohne Verzug zu gewährleisten. Damit kann standfest die Herstellung eines hochqualitativen Spritzgussteils ermöglicht werden.

Vorzugsweise wird die zweite Auftragsschweißung von der ersten Auftragsschweißung durchgehend umlaufen. Dies stellt einen spaltfreien Übergang zwischen den beiden Auftragsschweißungen sicher und kann damit reproduzierbare Verfahrensbedingungen ermöglichen.

Beispielsweise schließt die zweite Auftragsschweißung sowohl am Grundkörper als auch an der ersten Auftragsschweißung an. Dies verbessert die Festigkeit der Verbindung zwischen der ersten Auftragsschweißung und der Vorkammerbuchse und erhöht so die Standfestigkeit Vorkammerbuchse - insbesondere bei einer Verwendung mit einer Heißkanaldüse.

Vorstehendes kann weiter verbessert werden, wenn sich eine Schweißfläche der zweiten Auftragsschweißung am Grundkörper und/oder an der ersten Auftragsschweißung kegelstumpfförmig nach außen erweitert/erweitern.

Wird zumindest der vordere Abschnitt des Angusskanals von der zweiten Auftragsschweißung vollständig ausgebildet, ist die mechanische Stabilität der Vorkammerbuchse zur Aufnahme einer Heißkanaldüse weiter verbesserbar. Dies auch insbesondere bei Verwendung einer Heißkanal-Verschlussdüse. Der Verschluss kommt nämlich dann höchstens mit der zweiten Auftragsschweißung in Kontakt, was die Standfestigkeit der Vorkammerbuchse weiter erhöht.

Vorzugsweise wird der seitliche Mantelabschnitt von im Wesentlichen zylindrischen Teilabschnitten gebildet, was den thermischen Kontakt zwischen der ersten Auftragsschweißung und dem Spritzgusswerkzeug zur Kühlung der Kavität weiter verbessern kann.

Beispielsweise kann der seitliche Mantelabschnitt zumindest eine Ringnut für eine Ringdichtung aufweisen, um einen dichten Anschluss der Vorkammerbuchse an das Spritzgusswerkzeug zu ermöglichen.

Hierzu kann vorgesehen sein, dass der Grundkörper die erste Ringnut für die erste Ringdichtung aufweist, wobei sich die erste Auftragsschweißung in Richtung vorderen Konturabschnitt nach dieser ersten Ringnut erstreckt.

Die Abdichtung zwischen Spritzgusswerkzeug und Vorkammerbuchse ist weiter erhöhbar, wenn die erste Auftragsschweißung die zweite Ringnut für eine zweite Ringdichtung aufweist.

Besonders hohe mechanische Festigkeit bei ausgezeichneter Wärmeleitfähigkeit an der ersten Auftragsschweißung kann ermöglicht werden, wenn die Kupferlegierung der ersten Auftragsschweißung eine Aluminiumbronze ist. Dies ist insbesondere dann zu gewährleisten, wenn es sich hierbei um eine zweiphasige Aluminiumbronze handelt.

Vorzugsweise weist die zweite Stahllegierung der zweiten Auftragsschweißung eine höhere Härte (HRC) nach Rockwell als erste Stahllegierung des Grundkörpers auf, um eine besonders hohe Verschleißfestigkeit zu erreichen. Beispielsweise weist die zweite Stahllegierung der zweiten Auftragsschweißung eine FeCrMo-Basis auf. Vorzugsweise kann vorgesehen sein, dass die zweite Stahllegierung der zweiten Auftragsschweißung eine Mindesthärte von 44 HRC, insbesondere 55 HRC, nach Rockwell auf.

Vorzugsweise weist die Kupferlegierung der ersten Auftragsschweißung eine höhere Wärmeleitfähigkeit als die erste Stahllegierung des Grundkörpers und/oder als die zweite Stahllegierung der zweiten Auftragsschweißung auf, um die Heißkanaldüse damit verbessert gegenüber dem Werkzeug wärmeisolieren zu können.

Beispielsweise weist der Grundkörper in seinem Aufnahmeabschnitt für die Heißkanaldüse zumindest eine Anlagefläche für die Heißkanaldüse auf, wobei der Grundkörper im Bereich der Anlagefläche eine im Vergleich mit an dieser anschließenden Bereichen erhöhte Materialstärke aufweist. Derart ist der Wärmeverlust an der Heißkanaldüse weiter verminderbar.

Die erfindungsgemäße Vorkammerbuchse eignet sich besonders für ein Spritzgusswerkzeug oder für eine Spritzgussmaschine mit einem Heißkanalsystem, das eine Heißkanaldüse aufweist, die in die Vorkammerbuchse ragt.

Die Erfindung hat sich zudem die Aufgabe gestellt, bei verminderten Betriebskosten die Reproduzierbarkeit in der Herstellung eines Spritzgussteils weiter zu erhöhen.

Die Erfindung löst die gestellte Aufgabe durch Anspruch 15.

Die erfindungsgemäße Vorkammerbuchse eignet sich besonders für eine Herstellung eines Spritzgussteils unter Verwendung des erfindungsgemäßen Spritzgusswerkzeugs oder der erfindungsgemäßen Spritzgussmaschine. Damit kann bei verminderten Betriebskosten durch geringere Wärmeverluste an der Heißkanaldüse die Reproduzierbarkeit in der Herstellung des Spritzgussteils weiter erhöht werden.

**In** den Figuren ist beispielsweise der Erfindungsgegenstand anhand einer Ausführungsvariante näher dargestellt. Es zeigen
- Fig. 1: eine Schnittansicht einer Vorkammerbuchse in einer Einbausituation an einer Spritzgussmaschine und
- Fig. 2: eine dreidimensionale Ansicht auf die nach Fig. 1 dargestellte Vorkammerbuchse.

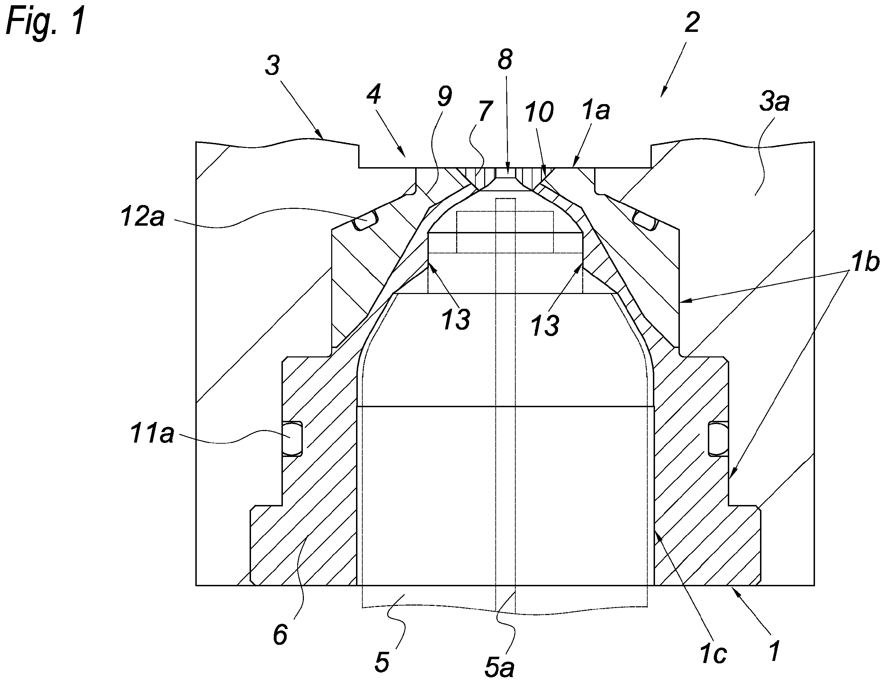

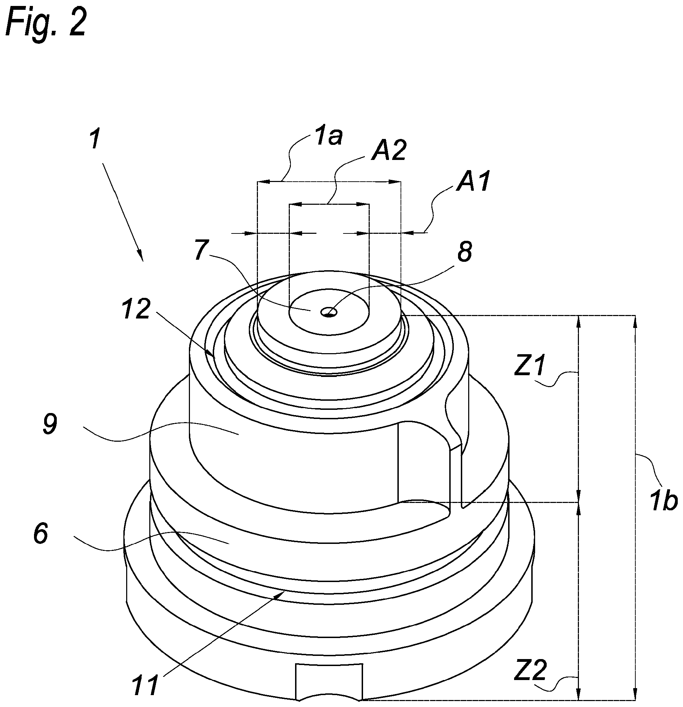

Nach den Figuren 1 und 2 ist eine Vorkammerbuchse 1 zu erkennen, die in einer Spritzgussmaschine 2 vorgesehen ist, und zwar zwischen einem Spritzgusswerkzeug 3 mit einer Kavität 4 sowie eine Heißkanaldüse 5.

Diese Vorkammerbuchse 1 weist einen vorderen Konturabschnitt 1a sowie einen seitlichen Mantelabschnitt 1b zum Anliegen an das Werkzeugteil 3a des Spritzgusswerkzeugs 3 auf. Der seitliche Mantelabschnitt 1b geht in den vorderen Konturabschnitt 1a über.

Die Vorkammerbuchse 1 weist zudem einen zentrischen Aufnahmeabschnitt 1c für die Aufnahme einer Heißkanaldüse 5 auf. Die Heißkanaldüse 5 ist - wie in Fig.1 schematisch dargestellt - eine Heißkanal-Nadelverschlussdüse mit einer Verschlussnadel 5a. Es ist aber auch jede andere Heißkanaldüse, etwa eine offene Heißkanaldüse oder eine Heißkanal-Verschlussdüse mit zumindest einem Verschlusselement, zu denen die Heißkanal-Nadelverschlussdüse mit der Verschlussnadel 5a zählt, denkbar.

Ein Grundkörper 6 der Vorkammerbuchse 1 ist aus einer ersten Stahllegierung. Zudem weist die Vorkammerbuchse 1 eine zweite Auftragsschweißung 7 aus einer zweiten Stahllegierung am Grundkörper 6 auf. Hierzu wurden ein Stahl-Pulver auftragsgeschweißt, wobei sich die erste und zweite Stahllegierung voneinander unterscheiden.

Diese zweite Auftragsschweißung 7 ist am vorderen Konturabschnitt 1a der Vorkammerbuchse 1 vorgesehen und bildet einen zweiten, in Draufsicht kreisringförmigen, Abschnitt A2 des vorderen Konturabschnitts 1a aus. Des Weiteren bildet die zweite Auftragsschweißung 7 den vorderen Abschnitt des Angusskanals 8 vollständig aus.

Der Grundkörper 6 besteht aus einer ersten Stahllegierung, die mit einer vergleichsweise geringen Wärmeleitfähigkeit im Vergleich mit den höher wärmeleitfähigen anderen Werkstoffen des Spritzgusswerkzeugs 3 eine thermische Trennung herzustellen. Der Grundkörper 6 hat vorzugsweise eine Wärmeleitfähigkeit von <30 W/(m*K), insbesondere ≤ 20 W/(m*K).

Beispielsweise handelt es sich beim Grundkörper 6 um einen Stahl der DIN Stahl-Eisen-Liste mit der Werkstoffnummer 1.4542 (X5-CrNiCuNb16-4). Dieser Werkstoff weist beispielsweise eine Wärmeleitfähigkeit von 16 W/(m*K) auf. Alternativ vorstellbar ist ein Stahl der DIN Stahl-Eisen-Liste mit der Werkstoffnummer 1.2709.

Dies beeinträchtigt jedoch nicht die Kühlung der Kavität 4, da erfindungsgemäß die Vorkammerbuchse 1 eine erste Auftragsschweißung 9 aus einer Kupferlegierung außen am Grundkörper 6 aufweist. Diese erste Auftragsschweißung 9 bildet den seitlichen Mantelabschnitt 1b der Vorkammerbuchse 1 zumindest teilweise der Höhe nach aus - die erste Auftragsschweißung 9 umläuft den Grundkörper 6 durchgehend, wie in Fig. 1 und in Fig. 2 zu erkennen.

Zudem erstreckt sich erste Auftragsschweißung 9 über einen ersten Abschnitt A1 des vorderen Konturabschnitts 1a bis zum zweiten Abschnitt A2 des vorderen Konturabschnitts 1a. Da der erste Abschnitt A1 Teil der Formfläche der Kavität 4 darstellt, kann für eine ausreichende Kühlung der Kavität 4 gesorgt werden - was einen Verzug am Spritzgussteil verhindert. Im Ausführungsbeispiel bildet sich damit der vordere Konturabschnitt 1a durch dessen ersten und zweiten Abschnitt A1, A2 aus.

Wie zudem der Fig. 2 entnommen werden kann, wird die zweite Auftragsschweißung 7 von der ersten Auftragsschweißung 9 durchgehend umlaufen. Auch schließt die zweite Auftragsschweißung 7 sowohl am Grundkörper 6 als auch an der ersten Auftragsschweißung 9 an und bildet mit Grundkörper 6 und erster Auftragsschweißung 9 Schweißflächen 10 - was diese zweite Auftragsschweißung 7 standfest und damit mechanisch hochbelastbar an der Vorkammerbuchse 1 hält.

Wie in der Fig. 1 zu erkennen, erweitert sich die Schweißfläche 10 der zweiten Auftragsschweißung 7 am Grundkörper 6 und an der ersten Auftragsschweißung 9 kegelstumpfförmig nach außen. Damit kann die Anbindungsfläche erhöht werden, was den Halt der zweiten Auftragsschweißung 7 an der Vorkammerbuchse 1 erhöht. Diese kegelstumpfförmige Schweißfläche 10 kann beispielsweise durch ein Abtragen, beispielsweise Fräsen oder Drehen, von Material geschaffen werden, nachdem die erste Auftragsschweißung 9 am Grundkörper 6 erzeugt worden ist. Darauf kann in einem folgenden Schritt die zweite Auftragsschweißung 7 aufgeschweißt werden.

Wie der Fig. 2 zu entnehmen, besteht der seitliche Mantelabschnitt 1b außen aus im Wesentlichen zylindrischen Teilabschnitten Z1, Z2. Davon wird von der ersten Auftragsschweißung 9 der erste Teilabschnitt Z1 ausgebildet.

Am seitlichen seitliche Mantelabschnitt 1b sind zwei Ringnuten 11, 12 für Ringdichtungen 11a, 12a vorgesehen. Davon weist der Grundkörper 6 die erste Ringnut 11 für eine erste Ringdichtung 11a auf. Der Grundkörper 4 bildet damit den zweiten Teilabschnitt Z2 aus. Die erste Auftragsschweißung 9 bildet die zweite Ringnut 12 für eine zweite Ringdichtung 12a aus. Damit kann die Vorkammerbuchse 1 dicht in das Spritzgusswerkzeug 3 der Spritzgussmaschine 2 integriert werden.

Die Kupferlegierung der ersten Auftragsschweißung 9 ist eine - im Ausführungsbeispiel zweiphasige - Aluminiumbronze, was bei hoher Festigkeit eine ausgezeichnete Wärmeleitfähigkeit ermöglicht und damit die Kavität 4 besonders vorteilhaft kühlt, um Verzugsfreiheit am Spritzgussteil zu garantieren.

Die Kupferlegierung wird beispielsweise als Pulver auftragsgeschweißt. Hierzu eignet sich insbesondere Aluminiumbronze mit einer AlCu-Basis, beispielsweise CuAl8, CuAl10 etc. Diese kann als AlCu-Basis höchstens 12 % Aluminium sowie ggf. Zusätze von höchstens 2 % Silizium, höchstens 6 % Eisen, höchstens 6 % Nickel und/oder höchstens 14 % Mangan enthalten.

Die zweite Stahllegierung der zweiten Auftragsschweißung 7 weist nach Rockwell eine höhere Härte HRC auf als die erste Stahllegierung des Grundkörpers 6. Damit ist die zweite Stahllegierung gegenüber Abrieb äußerst stabil ist und kann verschleißfest den Belastungen einer Heißkanaldüse 5 widersteht. Hierfür weist die zweite Auftragsschweißung im Ausführungsbeispiel eine Härte 55 HRC nach Rockwell auf. Eine chemische Analyse der besonders bevorzugten zweiten Stahllegierung mit einer FeCrMo-Basis zeigte: 7,00 Gew.-% Chrom (Cr), 2,50 Gew.-% Molybdän (Mo), 0,5 Gew.-% Kohlenstoff (C), 0,50 Gew.-% Mangan (Mn), 0,40 Gew.-% Silizium (Si) und als Rest Eisen (Fe) sowie unvermeidbare Verunreinigungen.

Zudem kann der Fig. 1 entnommen werden, dass der Grundkörper 6 in seinem Aufnahmeabschnitt 1c zumindest eine Anlagefläche 13 für die Heißkanaldüse 5 aufweist. In Bereich der Anlagefläche 13 weist der Grundkörper 6 eine im Vergleich mit seinen daran anschließenden Bereichen eine erhöhte Materialstärke auf, um den Wärmeverlust der Heißkanaldüse 5 weiter zu vermindern. Es ist aber auch vorstellbar, dass die Heißkanaldüse 5 zusätzlich in diesem Bereich einen vergleichsweise schlecht wärmeleitfähigen Werkstoff aufweist oder ein Keramikring als Abstandshalter vorgesehen ist - was nicht dargestellt worden ist.

Generell eignet sich für die beiden Auftragsschweißungen der Pulver-Stahllegierungen ein Laser-Auftragsschweißen, wenn auch nicht ausschließlich solch eines.

## Patentansprüche

1. Vorkammerbuchse (1) für eine Heißkanaldüse (5) eines Heißkanalsystems eines Spritzgusswerkzeugs (3) einer Spritzgussmaschine (2),
mit einem Grundkörper (6) aus einer ersten Stahllegierung,
mit einer zweiten Auftragsschweißung (7) aus einer zweiten Stahllegierung am Grundkörper (6),
wobei die Vorkammerbuchse (1) einen seitlichen Mantelabschnitt (1b) zum Anliegen an ein Werkzeugteil (3a) des Spritzgusswerkzeugs (3) der Spritzgussmaschine (2), einen vorderen Konturabschnitt (1a) für eine Kavität (4) des Spritzgusswerkzeugs (3) und einen am vorderen Konturabschnitt (1a) austretenden Angusskanal (8) für die Kavität (4) des Spritzgusswerkzeugs (3) aufweist, und
wobei die zweite Auftragsschweißung (7) einen zweiten Abschnitt (A2) am vorderen Konturabschnitt (1a) und zumindest teilweise den Angusskanal (8) ausbildet,
**dadurch gekennzeichnet, dass**
die Vorkammerbuchse (1) eine erste Auftragsschweißung (9) aus einer Kupferlegierung außen am Grundkörper (6) aufweist,
wobei die erste Auftragsschweißung (9) den seitlichen Mantelabschnitt (1b) zumindest teilweise ausbildet und sich über einen ersten Abschnitt (A1) des vorderen Konturabschnitts (1a) bis zum zweiten Abschnitt (A2) des vorderen Konturabschnitts (1a) erstreckt.

2. Vorkammerbuchse nach Anspruch 1, **dadurch gekennzeichnet, dass** die zweite Auftragsschweißung (7) von der ersten Auftragsschweißung (9) durchgehend umlaufen wird.

3. Vorkammerbuchse nach Anspruch 1 oder 2, **dadurch gekennzeichnet, dass** die zweite Auftragsschweißung (7) sowohl am Grundkörper (6) als auch an der ersten Auftragsschweißung (9) anschließt.

4. Vorkammerbuchse nach einem der Ansprüche 1 bis 3, **dadurch gekennzeichnet, dass** sich eine Schweißfläche (10) der zweiten Auftragsschweißung (7) am Grundkörper (6) und/oder an der ersten Auftragsschweißung (9) kegelstumpfförmig nach außen erweitert/erweitern.

5. Vorkammerbuchse nach einem der Ansprüche 1 bis 4, **dadurch gekennzeichnet, dass** zumindest der vordere Abschnitt des Angusskanals (8) von der zweiten Auftragsschweißung (7) vollständig ausgebildet wird.

6. Vorkammerbuchse nach einem der Ansprüche 1 bis 5, **dadurch gekennzeichnet, dass** der seitliche Mantelabschnitt (1b) von im Wesentlichen zylindrischen Teilabschnitten (Z1, Z2) gebildet wird.

7. Vorkammerbuchse nach einem der Ansprüche 1 bis 6, **dadurch gekennzeichnet, dass** der seitliche Mantelabschnitt (1b) zumindest eine Ringnut (11, 12) für eine Ringdichtung (11a, 12a) aufweist.

8. Vorkammerbuchse nach Anspruch 7, **dadurch gekennzeichnet, dass** der Grundkörper (6) die erste Ringnut (11) für die erste Ringdichtung (11a) aufweist, wobei sich die erste Auftragsschweißung (9) in Richtung vorderen Konturabschnitt (1a) nach dieser ersten Ringnut (11) erstreckt.

9. Vorkammerbuchse nach Anspruch 7 oder 8, **dadurch gekennzeichnet, dass** die erste Auftragsschweißung (9) die zweite Ringnut (12) für eine zweite Ringdichtung (12a) aufweist.

10. Vorkammerbuchse nach einem der Ansprüche 1 bis 9, **dadurch gekennzeichnet, dass** die Kupferlegierung der ersten Auftragsschweißung (9) eine, insbesondere zweiphasige, Aluminiumbronze ist.

11. Vorkammerbuchse nach einem der Ansprüche 1 bis 10, **dadurch gekennzeichnet, dass** die zweite Stahllegierung der zweiten Auftragsschweißung, insbesondere mit einer FeCrMo-Basis, eine höhere Härte (HRC) nach Rockwell als die erste Stahllegierung des Grundkörpers (7) aufweist und/oder dass die zweite Stahllegierung der zweiten Auftragsschweißung eine Mindesthärte von 44 HRC, insbesondere 55 HRC, nach Rockwell aufweist.

12. Vorkammerbuchse nach einem der Ansprüche 1 bis 11, **dadurch gekennzeichnet, dass** die Kupferlegierung der ersten Auftragsschweißung (9) eine höhere Wärmeleitfähigkeit als die erste Stahllegierung des Grundkörpers (4) und/oder als die zweite Stahllegierung der zweiten Auftragsschweißung (7) aufweist.

13. Vorkammerbuchse nach einem der Ansprüche 1 bis 12, **dadurch gekennzeichnet, dass** der Grundkörper (6) in seinem Aufnahmeabschnitt (1c) für die Heißkanaldüse (5) zumindest eine Anlagefläche (13) für die Heißkanaldüse (5) aufweist, wobei der Grundkörper (6) im Bereich der Anlagefläche (13) eine im Vergleich mit an dieser anschließenden Bereichen erhöhte Materialstärke aufweist.

14. Spritzgusswerkzeug oder Spritzgussmaschine mit einem Heißkanalsystem, das eine Heißkanaldüse (5) aufweist, und mit einer Vorkammerbuchse (1) nach einem der Ansprüche 1 bis 13, wobei die Heißkanaldüse (5) in die Vorkammerbuchse (1) ragt.

15. Verfahren zur Herstellung zumindest eines Spritzgussteils unter Verwendung eines Spritzgusswerkzeugs (3) oder einer Spritzgussmaschine (2) nach Anspruch 14.

## Claims

1. Prechamber bushing (1) for a hot runner nozzle (5) of a hot runner system of an injection molding tool (3) of an injection molding machine (2),
having a base body (6) made of a first steel alloy,
having a second build-up weld (7) made of a second steel alloy on the base body (6),
wherein the prechamber bushing (1) has a lateral jacket section (1b) for bearing against a mold part (3a) of the injection molding tool (3) of the injection molding machine (2), a front contour section (1a) for a cavity (4) of the injection molding tool (3), and a sprue channel (8) for the cavity (4) of the injection molding tool (3) emerging at the front contour section (1a), and
wherein the second build-up weld (7) forms a second section (A2) on the front contour section (1a) and at least partially forms the sprue channel (8),
**characterized in that**
the prechamber bushing (1) has a first build-up weld (9) made of a copper alloy on the outside of the base body (6),
wherein the first build-up weld (9) at least partially forms the lateral jacket section (1b) at least partially and extends over a first section (A1) of the front contour section (1a) to the second section (A2) of the front contour section (1a).

2. Prechamber bushing according to claim 1, **characterized in that** the second build-up weld (7) extends continuously around the first build-up weld (9).

3. Prechamber bushing according to claim 1 or 2, **characterized in that** the second build-up weld (7) connects to both the base body (6) and the first build-up weld (9).

4. Prechamber bushing according to one of claims 1 to 3, **characterized in that** a weld surface (10) of the second build-up weld (7) on the base body (6) and/or on the first build-up weld (9) widens/widen outward in a truncated cone shape.

5. Prechamber bushing according to one of claims 1 to 4, **characterized in that** at least the front section of the sprue channel (8) is completely formed by the second build-up weld (7).

6. Prechamber bushing according to one of claims 1 to 5, **characterized in that** the lateral jacket section (1b) is formed by substantially cylindrical subsections (Z1, Z2).

7. Prechamber bushing according to one of claims 1 to 6, **characterized in that** the lateral jacket section (1b) has at least one annular groove (11, 12) for an annular seal (11a, 12a).

8. Prechamber bushing according to claim 7, **characterized in that** the base body (6) has the first annular groove (11) for the first annular seal (11a), wherein the first build-up weld (9) extends in the direction of the front contour section (1a) after this first annular groove (11).

9. Prechamber bushing according to claim 7 or 8, **characterized in that** the first build-up weld (9) comprises the second annular groove (12) for a second annular seal (12a).

10. Prechamber bushing according to one of claims 1 to 9, **characterized in that** the copper alloy of the first build-up weld (9) is an aluminum bronze, more particularly a two-phase aluminum bronze.

11. Prechamber bushing according to one of claims 1 to 10, **characterized in that** the second steel alloy of the second build-up weld, more particularly with an FeCrMo base, has a higher Rockwell hardness (HRC) than the first steel alloy of the base body (7) and/or **in that** the second steel alloy of the second build-up weld has a minimum Rockwell hardness of 44 HRC, more particularly 55 HRC.

12. Prechamber bushing according to one of claims 1 to 11, **characterized in that** the copper alloy of the first build-up weld (9) has a higher thermal conductivity than the first steel alloy of the base body (4) and/or than the second steel alloy of the second build-up weld (7).

13. Prechamber bushing according to one of claims 1 to 12, **characterized in that** the base body (6) has at least one contact surface (13) for the hot runner nozzle (5) in its receiving section (1c) for the hot runner nozzle (5), wherein the base body (6) has an increased material thickness in the region of the contact surface (13) compared to regions adjacent thereto.

14. Injection molding tool or injection molding machine having a hot runner system comprising a hot runner nozzle (5) and a prechamber bushing (1) according to one of claims 1 to 13, wherein the hot runner nozzle (5) protrudes into the prechamber bushing (1).

15. Method for producing at least one injection molded part using an injection molding tool (3) or an injection molding machine (2) according to claim 14.

## Revendications

1. Douille de préchambre (1) pour une buse de canal chaud (5) d'un système de canal chaud d'un outil de moulage par injection (3) d'un machine de moulage par injection (2), avec un corps de base (6) fait d'un premier alliage d'acier,
avec une deuxième soudure de rechargement (7) faite d'un deuxième alliage d'acier sur le corps de base (6),
dans laquelle la douille de préchambre (1) comporte un segment d'enveloppe latéral (1b) destiné à s'appliquer sur une partie d'outil (3a) de l'outil de moulage par injection (3) de la machine de moulage par injection (2), un segment de contour antérieur (1a) pour une cavité (4) de l'outil de moulage par injection (3) et un canal de coulée (8) sortant du segment de contour antérieur (1a) pour la cavité (4) de l'outil de moulage par injection (3), et
dans laquelle la deuxième soudure de rechargement (7) forme un deuxième segment (A2) sur le segment de contour antérieur (1a) et au moins en partie le canal de coulée (8),
**caractérisée en ce que** la douille de préchambre (1) comporte une première soudure de rechargement (9) en alliage de cuivre sur l'extérieur du corps de base (6),
laquelle première soudure de rechargement (9) forme au moins en partie le segment d'enveloppe latéral (1b) et s'étend sur un premier segment (A1) du segment de contour antérieur (1a) jusqu'au deuxième segment (A2) du segment de contour antérieur (1a).

2. Douille de préchambre selon la revendication 1, **caractérisée en ce que** la deuxième soudure de rechargement (7) est entourée de façon continue par la première soudure de rechargement (9).

3. Douille de préchambre selon la revendication 1 ou 2, **caractérisée en ce que** la deuxième soudure de rechargement (7) se raccorde aussi bien au corps de base (6) qu'à la première soudure de rechargement (9).

4. Douille de préchambre selon l'une des revendications 1 à 3, **caractérisée en ce qu'**une surface de soudure (10) de la deuxième soudure de rechargement (7) s'élargit vers l'extérieur en tronc de cône sur le corps de base (6) et/ou sur la première soudure de rechargement (9).

5. Douille de préchambre selon l'une des revendications 1 à 4, **caractérisée en ce que** le segment antérieur, au moins, du canal de coulée (8) est entièrement formé par la deuxième soudure de rechargement (7).

6. Douille de préchambre selon l'une des revendications 1 à 5, **caractérisée en ce que** le segment d'enveloppe latéral (1b) est formé de segments partiels (Z1, Z2) sensiblement cylindriques.

7. Douille de préchambre selon l'une des revendications 1 à 6, **caractérisée en ce que** le segment d'enveloppe latéral (1b) comporte au moins une gorge annulaire (11, 12) pour un joint annulaire (11a, 12a).

8. Douille de préchambre selon la revendication 7, **caractérisée en ce que** le corps de base (6) comporte la première rainure annulaire (11) pour le premier joint annulaire (11a), la première soudure de rechargement (9) s'étendant en direction du segment de contour antérieur (1a) vers cette première rainure annulaire (11).

9. Douille de préchambre selon la revendication 7 ou 8, **caractérisée en ce que** la première soudure de rechargement (9) comporte la deuxième rainure annulaire (12) pour un deuxième joint annulaire (12a).

10. Douille de préchambre selon l'une des revendications 1 à 9, **caractérisée en ce que** l'alliage de cuivre de la première soudure de rechargement (9) est un bronze d'aluminium, en particulier biphasé.

11. Douille de préchambre selon l'une des revendications 1 à 10, **caractérisée en ce que** le deuxième alliage d'acier de la deuxième soudure de rechargement, en particulier à base de FeCrMo, présente une dureté Rockwell (HRC) plus élevée que le premier alliage d'acier du corps (7) et/ou **en ce que** le deuxième alliage d'acier de la deuxième soudure de rechargement présente une dureté Rockwell minimale de HRC 44, en particulier HRC 55.

12. Douille de préchambre selon l'une des revendications 1 à 11, **caractérisée en ce que** l'alliage de cuivre de la première soudure de rechargement (9) présente une conductibilité thermique plus élevée que le premier alliage d'acier du corps de base (4) et/ou que le deuxième alliage d'acier de la deuxième soudure de rechargement (7).

13. Douille de préchambre selon l'une des revendications 1 à 12, **caractérisée en ce que** le corps de base (6) comporte dans son segment de réception (1c) destiné à la buse de canal chaud (5) au moins une surface d'appui (13) pour la buse de canal chaud (5), le corps de base (6) présentant, au niveau de la surface d'appui (13), une épaisseur de matériau augmentée par rapport aux zones contiguës.

14. Outil de moulage par injection ou machine de moulage par injection comprenant un système de canal chaud qui comporte une buse de canal chaud (5) et comprenant une douille de préchambre (1) selon l'une des revendications 1 à 13, dans lequel la buse de canal chaud (5) dépasse dans la douille de préchambre (1).

15. Procédé pour la fabrication d'au moins une pièce moulée par injection en utilisant un outil de moulage par injection (3) ou une machine de moulage par injection (2) selon la revendication 14.
